# EUROPÄISCHE PATENTANMELDUNG

(11) **EP 0 750 976 A2**
(43) Veröffentlichungstag der Anmeldung: **02.01.1997**
(21) Anmeldenummer: 96110188.8
(22) Anmeldetag: 24.06.1996
(51) Int. Cl.: B29C 45/67

(54) **Hydraulische Formschliessvorrichtung für eine Spritzgiessmaschine**

(30) Priorität: 28.06.1995 DE 19523420
(71) Anmelder: DR. BOY GmbH, D-53577 Neustadt (DE)
(72) Erfinder: Klein, Heinz Hermann, 53547 Rossbach (DE); Filippi, Werner, 56579 Bonefeld (DE)
(74) Vertreter: Hosbach, Hans Ulrich

(57) **Zusammenfassung**

Die hydraulische Formschließvorrichtung für eine Spritzgießmaschine weist einen Druckübersetzer (6) auf, dessen Hochdruckkolben (10) beim Aufbau des Schließdruckes in einen zur Druckseite des Schließkolbens (2) führenden Kanal (5) eintaucht und diesen verschließt. Im Niederdruckkolben (9) ist ein Fahrzylinder (11) ausgebildet, in den ein Fahrkolben (12) eintaucht. Der Fahrkolben (12) ist an den Hydrauliktank (T) und an die Hydraulikpumpe (P) anschließbar. An den Niederdruckzylinder (15) des Druckübersetzers (6) schließt sich ein Raum (16) an, dessen Durchmesser größer als der des Niederdruckzylinders (15) ist. Ferner weist der Fahrkolben (12) seitliche Öffnungen (17) auf, die aus dem Fahrzylinder (11) austreten, sobald der Hochdruckkolben (10) in den Hochdruckzylinder (14) eintritt. Das Kolbenelement (8) des Druckübersetzers (6) wird aus der Ruhestellung heraus sehr rasch in seine aktive Position bewegt, so daß mit verminderten Steuerzeiten gearbeitet werden kann.

## Beschreibung

Die Erfindung betrifft eine hydraulische Formschließvorrichtung für eine Spritzgießmaschine, insbesondere zur Verarbeitung von Kunststoff mit
- mindestens einem in einem Schließzylindergehäuse arbeitenden Schließkolben,
- einem Hydrauliktank,
- einer Hydraulikpumpe,
- einem zur Druckseite des Schließkolbens führenden Kanal, der mit dem Hydrauliktank verbindbar ist, und
- einem mit dem Kanal verbundenen Druckübersetzer, in dessen Gehäuse ein einen Hochdruckkolben und einen Niederdruckkolben bildendes Kolbenelement arbeitet, wobei der Hochdruckkolben beim Aufbauen des Schließdrucks als abdichtendes Ventilelement in den einen Hochdruckzylinder bildenden Kanal eintaucht und der Niederdruckkolben mit einem Niederdruckzylinder zusammenwirkt.

Eine derartige Vorrichtung ist aus der DE 2834895 C2 bekannt. Bei der Schließbewegung des Schließkolbens füllt sich der Raum hinter dem Schließkolben mit Hydraulikflüssigkeit. Die Hydraulikflüssigkeit strömt dabei durch den Kanal, der die Druckseite des Schließkolbens mit dem Hydrauliktank verbindet. Nach Beendigung der Schließbewegung wird der Druckübersetzer betätigt, und zwar durch Druckbeaufschlagung des Niederdruckkolbens. Dabei wandert der Hochdruckkolben in den Hochdruckzylinder hinein, der von dem vom Hydrauliktank zur Druckseite des Schließkolbens führenden Kanal gebildet wird. Der Hochdruckkolben des Druckübersetzers verschließt diesen Kanal und baut hinter dem Schließzylinder den eigentlichen Schließdruck auf.

Nach Beendigung des Spritztaktes erfolgt eine erneute Betätigung des Druckübersetzers, und zwar in entgegengesetzter Richtung. Der zum Hydrauliktank führende Kanal wird also wieder geöffnet, woraufhin der Schließkolben bei seiner Rückzugsbewegung die Hydraulikflüssigkeit in den Hydrauliktank ausschieben kann. Der bekannte Antrieb zeichnet sich durch sehr günstige strömungstechnische Verhältnisse zwischen dem Hydrauliktank und der Druckseite des Schließkolbens aus, und zwar bei einfacher Konstruktion und Steuerung. Allerdings erscheint die Steuerungsgeschwindigkeit des bekannten Antriebs als verbesserungsfähig.

Der Erfindung liegt dementsprechend die Aufgabe zugrunde, eine hydraulische Formschließvorrichtung der eingangs genannnten Art zu schaffen, die mit verminderten Steuerungszeiten arbeitet.

Zur Lösung dieser Aufgabe ist die Formschließvorrichtung nach der Erfindung dadurch gekennzeichnet,
- daß der Niederdruckkolben des Druckübersetzers druckseitig einen Fahrzylinder bildet, in den ein rohrförmiger, an die Hydraulikpumpe und an den Hydrauliktank anschließbarer Fahrkolben eintaucht,
- daß sich an den Niederdruckzylinder druckseitig ein Raum mit erweitertem Durchmesser zur Aufnahme des Niederdruckkolbens bei geöffnetem Hochdruckzylinder anschließt, wobei in dieser Stellung der Abstand des Niederdruckkolbens vom Niederdruckzylinder höchstens dem Hub des Hochdruckkolbens bis zum abdichtenden Eintauchen in den Hochdruckzylinder entspricht, und
- daß der rohrförmige Fahrkolben seitliche Öffnungen aufweist, die aus dem Fahrzylinder austreten, sobald der Hochdruckkolben in den Hochdruckzylinder eintritt.

Diese Konstruktion hat den wesentlichen Vorteil, daß das Kolbenelement des Druckübersetzers mit hoher Geschwindigkeit aus seiner Ruhestellung in diejenige Position bewegt werden kann, in der der Aufbau des Schließdrucks beginnt, d.h., in der der Hochdruckkolben abdichtend in den Hochdruckzylinder eintritt. Gleichzeitig oder geringfügig früher tritt auch der Niederdruckkolben in den Niederdruckzylinder ein. Bis zu diesem Zeitpunkt kann der Niederdruckkolben zu seiner Druckseite hin umströmt werden, so daß sich der Raum mit dem erweiterten Durchmesser automatisch füllt. Sobald der Hochdruckkolben in den Hochdruckzylinder eintritt, werden die seitlichen Öffnungen des Fahrkolbens auf der Druckseite des Niederdruckkolbens frei, so daß der Aufbau des Schließdruckes beginnen kann.

Die Erhöhung der Steuerungsgeschwindigkeit wird ohne zusätzlichen Steuerungsaufwand und mit konstruktiv einfachen Mitteln erzielt.

Befindet sich das Kolbenelement des Druckübersetzers in einer Position, in der der Hochdruckzylinder geöffnet ist, so liegt keiner der beiden Kolben an seine Zylinderwand an. Die Führung des Kolbenelementes wird dabei von dem in seinen Fahrzylinder eintauchenden Fahrkolben übernommen. Um die Führung zu verbessern, wird in Weiterbildung der Erfindung vorgeschlagen, daß der Hochdruckkolben des Druckübersetzers einen axialen Zapfen trägt, der in einer Gehäuseführung gleitet. Auf diese Weise wird das Kolbenelement des Druckübersetzers an beiden Enden sicher geführt.

Dabei kann es vorteilhaft sein, daß die Gehäuseführung für den axialen Zapfen als Zylinder ausgebildet sowie mit dem Hydrauliktank und der Hydraulikpumpe verbindbar ist. Nach Beendigung eines Spritzvorganges wird dieser Zylinder an den Systemdruck angeschlossen, wodurch das Kolbenelement des Druckübersetzers in seine Öffnungsstellung gelangt. Diese Ausführungsform ist dann von Vorteil, wenn der Drucküberetzer in einem Ssystem arbeitet, bei dem die Hydraulikflüssigkeit bei der Schließbewegung des Schließkolbens in den Druckraum hinter letzterem eingesaugt wird. Nach Beendigung eines Spritzvorganges wird dieser Raum und damit auch die Druckseite des Hochdruckkolbens des Druckübersetzers schlagartig drucklos, sobald der Hochdruckkolben geringfügig aus dem Hochdruckzylinder herausgewandert ist. Eine automatische Rückstellung des Kolbenelements des Druckübersetzers würde daher ohne den Zylinder für den axialen Zapfen nur in geringem Maße stattfinden. Zylinder und axialer Zapfen sorgen dafür, daß der Hochdruckzylinder des Druckübersetzers vollständig geöffnet wird und daß somit der nächstfolgende Ansaughub unter optimalen Strömungsbedingungen stattfinden kann.

Der Druckübersetzer ist jedoch auch in Differential-Umlaufsystemen einsatzbar, wofür in Weiterbildung der Erfindung vorgeschlagen wird, daß der zur Druckseite des Schließkolbens führende Kanal bei geöffnetem Hochdruckzylinder des Druckübersetzers an einen Kanal angeschlossen ist, der zu der der Druckseite entgegengesetzten Seite des Schließkolbens führt. Dieser Kanal wird zur Erzielung der erforderlichen Schließkolbenbewegungen unter den Systemdruck gesetzt. Wird also der rohrförmige Fahrkolben des Drucküberetzers an den Hydrauliktank angeschlossen, wirkt auf das Kolbenelement ein Differenzdruck ein, der das Kolbenelement in die vollständige Öffnungsstellung wandern läßt.

Die Erfindung wird im folgenden anhand bevorzugter Ausführungsbeispiele im Zusammenhang mit der beiliegenden Zeichnung näher erläutert. Die Zeichnung zeigt in:
Fig. 1 einen schematischen Schnitt durch eine erste Ausführungsform;
Fig. 2 die Ausführungsform nach Fig. 1 in einer zweiten Schaltstellung;
Fig. 3 die Ausführungsform nach Fig. 1 in einer dritten Schaltstellung;
Fig. 4 einen schematischen Schnitt durch eine zweite Ausführungsform;
Fig. 5 die Ausführungsform nach Fig. 4 in einer zweiten Schaltstellung;
Fig. 6 die Ausführungsform nach Fig. 4 in einer dritten Schaltstellung;
Fig. 7 die Ausführungsform nach Fig. 4 in einer vierten Schaltstellung.

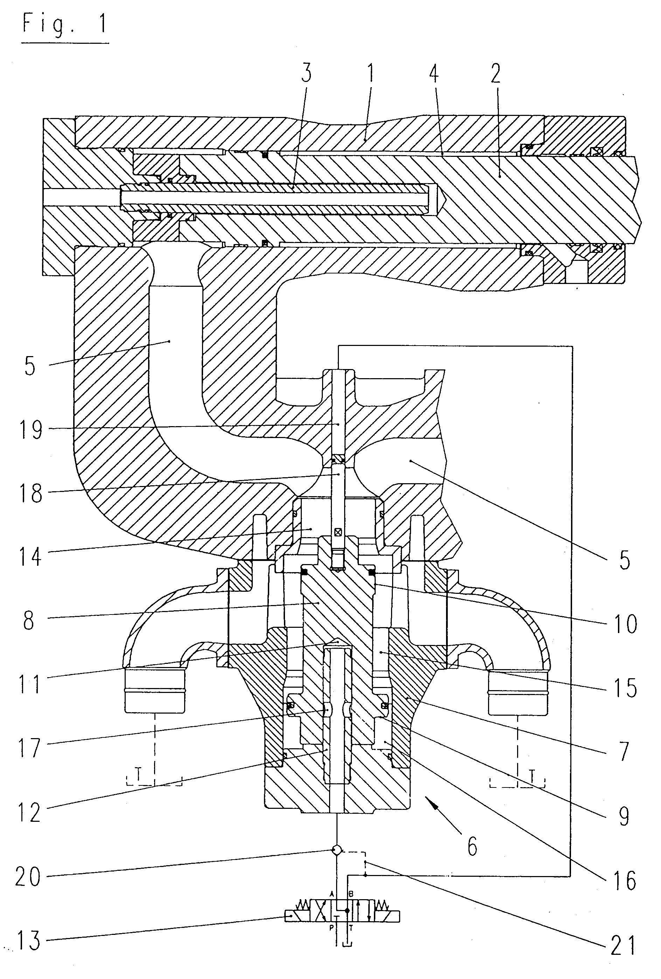

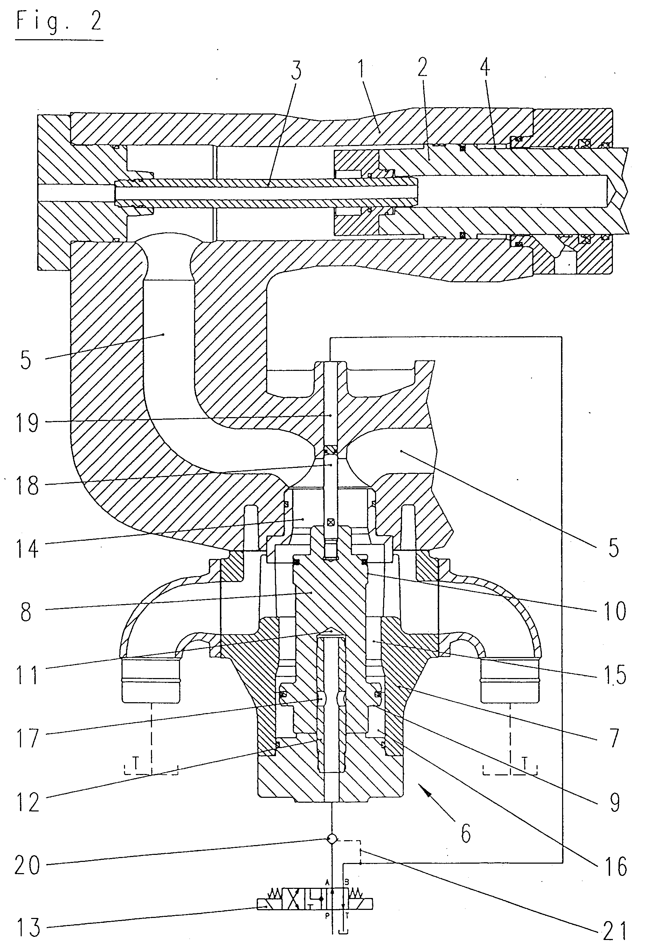

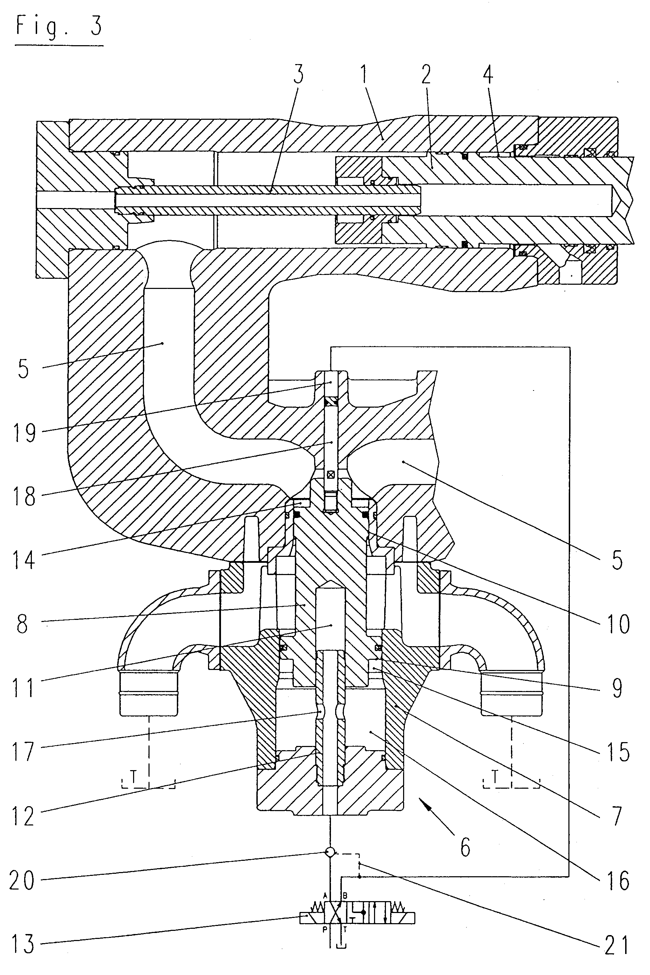

Die hydraulische Formschließvorrichtung nach den Fig. 1 bis 3 ist Bestandteil einer Kunststoff-Spritzgießmaschine und dient dazu, die bewegbare Formhälfte zwischen ihrer Öffnungsstellung hin und her zu bewegen, wobei in der Schließstellung der Schließdruck aufgebaut wird. Sie weist ein Schließzylindergehäuse 1 auf, in der ein Schließkolben 2 arbeitet. Dieser befindet sich nach Fig. 1 in der Öffnungsstellung und nach den Fig. 2 und 3 in der Schließstellung. Die Bewegung aus der Öffnungsstellung in die Schließstellung wird von einem Fahrkolben 3 bewirkt, während zur entgegengesetzten Bewegung ein Ringraum 4 mit dem Systemdruck beaufschlagt wird.

Wandert der Schließkolben 2 aus seiner Position nach Fig. 1 in die Position nach den Fig. 2 und 3, so saugt er über einen Kanal 5 Hydraulikflüssigkeit aus einem schematisch angedeuteten Hydrauliktank T an. Fig. 2 zeigt die Anordnung nach Beendigung der Schließbewegung. Es erfolgt nun der Aufbau des Schließdrucks, und zwar unter Betätigung eines Druckübersetzers 6.

Der Druckübersetzer 6 weist ein Gehäuse 7 auf, in dem ein Kolbenelement 8 arbeitet. Letzteres bildet einen Niederdruckkolben 9 und einen Hochdruckkolben 10. Auf der Seite des Niederdruckkolbens 9 ist das Kolbenelement 8 mit einem Fahrzylinder 11 versehen, in den ein rohrförmiger Fahrkolben 12 eintaucht.

Hat der Schließkolben 2 die Position nach Fig. 2 erreicht, so wird ein Ventil 13 aus der Position nach Fig. 1, in der der Druckübersetzer 6 drucklos ist, in die Position nach Fig. 2 geschaltet. Der Fahrkolben 12 wird also an eine nur symbolisch angedeutete Hydraulikpumpe P angeschlossen. Dadurch bewegt sich das Kolbenelement 8 aus der Position nach Fig. 2 in die Position nach Fig. 3. Bei dieser Bewegung tritt der Hochdruckkolben 10 des Kolbenelements in einen Hochdruckzylinder 14 ein, der von dem Kanal 5 gebildet wird. Der Hochdruckkolben 10 verschließt den Hochdruckzylinder 14 und damit den Kanal 5. Bei seiner Weiterbewegung baut er den Schließdruck auf.

Dies geschieht dadurch, daß bei der Bewegung des Kolbenelementes 8 dessen Niederdruckkolben 9 in einen Niederdruckzylinder 15 eintritt, der von dem Gehäuse 7 des Druckübersetzers 6 gebildet wird. Vorher durchwandert der Niederdruckkolben 9 einen Raum 16, dessen Durchmesser größer als der des Niederdruckzylinders 15 ist. Der Niederdruckkolben 9 wird also umströmt, so daß im Raum 16 kein Unterdruck auftreten kann. Die Abmaße sind so gewählt, daß der Eintritt des Niederdruckkolbens 9 in den Niederdruckzylinder 15 keinesfalls später erfolgt als der Eintritt des Hochdruckkolbens 10 in den Hochdruckzylinder 14.

Der Fahrkolben 12 des Druckübersetzers 6 weist seitliche Öffnungen 17 auf, die freigelegt werden, sobald der Niederdruckkolben 9 in den Niederdruckzylinder 15 eintritt. Auf diese Weise wird der Niederdruckkolben 9 druckseitig an den Systemdruck angeschlossen, so daß der Druckübersetzer 6 seine Funktion erfüllen kann.

Die Anordnung ist einfach im Aufbau und in der Steuerung. Ihr wesentlicher Vorteil liegt darin, daß mit sehr kurzen Steuerzeiten gearbeitet werden kann, da das Kolbenelement 8 des Druckübersetzers 6 rasch in seine aktive Position gelangt. Dies ist deshalb von wesentlicher Bedeutung, weil der Fahrweg des Kolbenelements 8 nicht zu klein gewählt werden darf, um die Strömungsverhältnisse im Kanal 5 möglichst verlustarm zu halten.

Solange die Kolben 9 und 10 des Kolbenelements 8 noch nicht in ihre zugehörigen Zylinder 15 bzw. 14 eingetreten sind, wird das Kolbenelement 8 von dem rohrförmigen Fahrkolben 12 geführt. Eine zusätzliche Führung bewirkt ein Zapfen 18, der hochdruckseitig axial in das Kolbenelement 8 eingeschraubt ist und in einer Gehäuseführung 19 gleitet. Die Gehäuseführung 19 ist als Zylinder ausgebildet, wobei der Zapfen 18 als Kolben arbeitet und den Rückhub des Kolbenelements 8 bewirkt.

Während des Spritzvorganges wird der Schließdrucks aufrechterhalten. Hierzu dient ein Rückschlagventil 20, das zwischen dem Fahrkolben 12 des Druckübersetzers 6 und dem Ventil 13 angeordnet ist.

Fig. 3 zeigt den Zustand direkt nach Beendigung des Spritzvorganges, wobei das Ventil 13 in diejenige Position geschaltet worden ist, die die Deaktivierung des Druckübersetzers 6 bewirkt. Die Hydraulikpumpe P ist an die Gehäuseführung 19 angeschlossen, so daß der Zapfen 18 des Kolbenelements 8 unter dem Systemdruck steht. Gleichzeitig liegt der Systemdruck über eine Steuerleitung 21 am Rückschlagventil 20 an und öffnet letzteres. Dadurch wird der Raum 16 auf der Druckseite des Niederdruckkolbens 9 an den Hydrauliktank T angeschlossen und dementsprechend drucklos. Der Zapfen 18 schiebt also das Kolbenelement 8 in die Ruheposition, wodurch der Kanal 5 geöffnet wird. Beim Rückhub des Schließkolbens 2 kann also die druckseitig befindliche Hydraulikflüssigkeit ungehindert in den Tank abströmen.

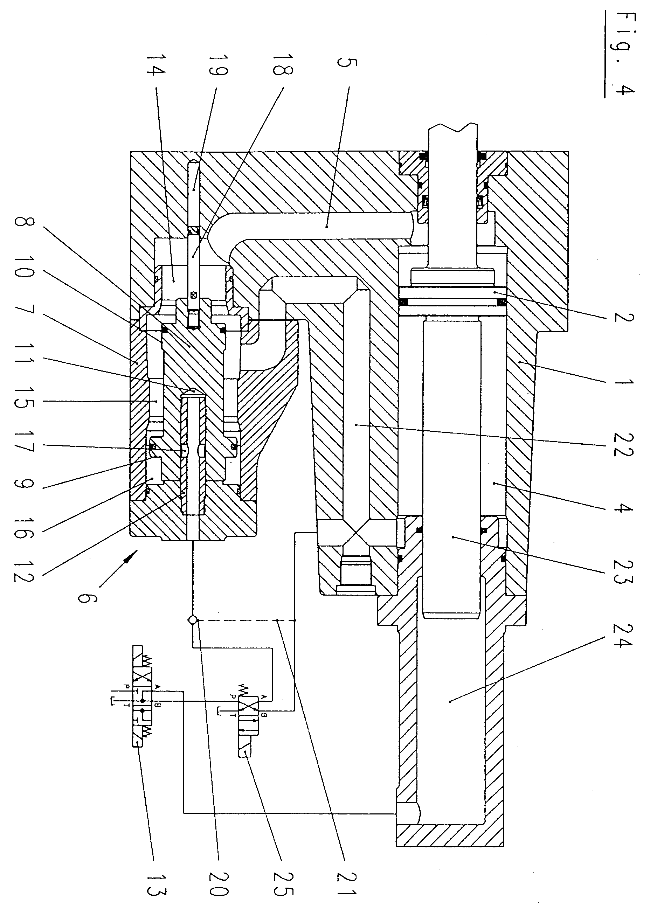

Während die Vorrichtung nach den Fig. 1 bis 3 die Hydraulikflüssigkeit druckseitig hinter dem Schließkolben 2 ansaugt, arbeitet die Vorrichtung nach den Fig. 4 bis 7 mit einem Differential-Umlaufsystem. Außerdem zieht der Schließkolben die bewegbare Formhälfte gegen die feste Formhälfte, während nach den Fig. 1 bis 3 die bewegbare Formhälfte gegen die feste Formhälfte gedrückt wird. Die folgende Beschreibung der Fig. 4 bis 7 nimmt lediglich auf die Unterschiede Bezug.

Nach den Fig. 4 bis 7 steht der Kanal 5 über den Druckübersetzer 6 mit einem Kanal 22 in Verbindung, der ein Überströmen der Hydraulikflüssigkeit von einer Seite des Schließkolbens 2 zur anderen ermöglicht und außerdem an den Hydrauliktank T und an die Hydraulikpumpe P anschließbar ist. Ferner ragt eine Verlängerung 23 des Schließkolbens 2 in einen Zylinderraum 24 hinein. Zusätzlich zu dem Ventil 13 ist ein weiteres Ventil 25 vorgesehen, um die erforderlichen Schaltschritte für die Steuerung durchführen zu können.

Fig. 4 zeigt den Schließkolben 2 bei geöffneter Form. Der Druckübersetzer 6 nimmt seine Öffnungsstellung ein, und die Ventile 13 und 25 halten das System drucklos.

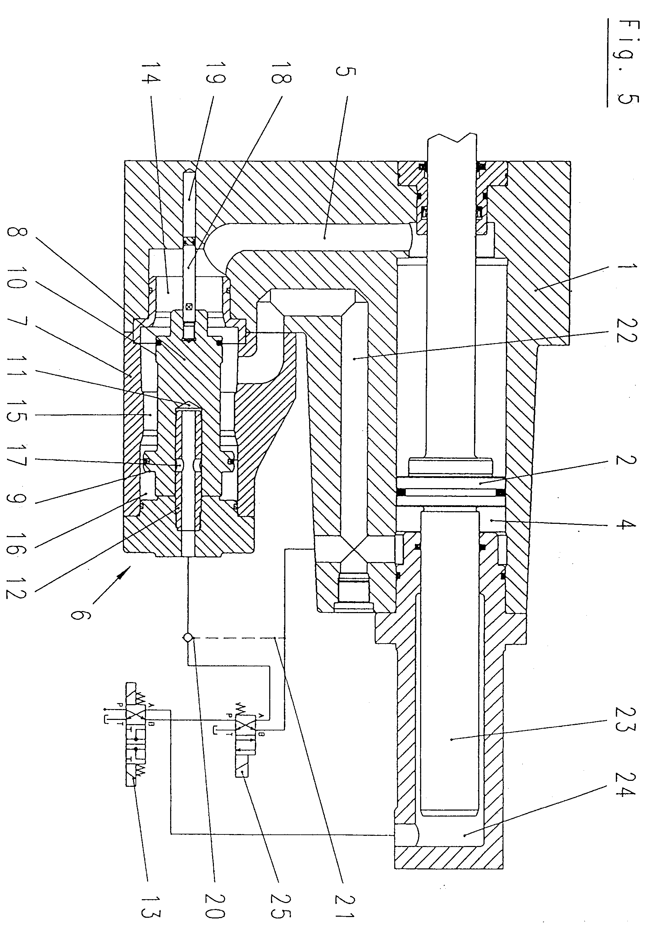

Nach Umschalten des Ventils 13 in die in Fig. 5 gezeigte Stellung sind die Kanäle 5 und 22 unter den Systemdruck gesetzt worden, woraufhin der Schließkolben 2 unter der Wirkung der aus den Flächenverhältnissen resultierenden Differenzdrücken nach rechts gewandert ist und die Form geschlossen hat. Die Hydraulikflüssigkeit ist dabei durch die Kanäle 5 und 22 zur Druckseite des Schließkolbens 2 übergeströmt.

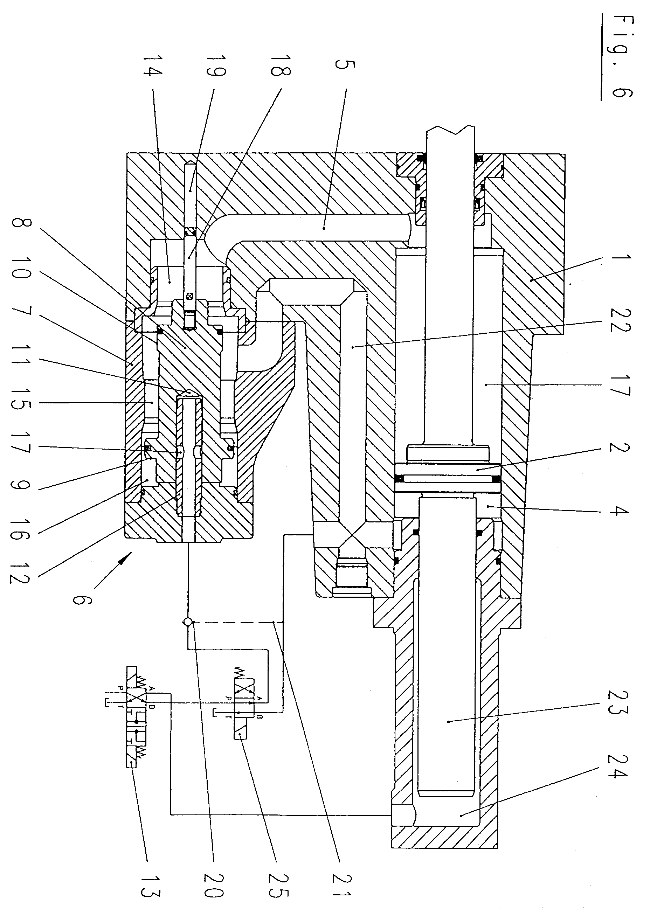

Durch Umschalten des Ventils 25 in die in Fig. 6 gezeigte Position wird der Aufbau des Schließdrucks eingeleitet, d.h., der Fahrkolben 12 des Druckübersetzeres 6 wird mit dem Systemdruck beaufschlagt.

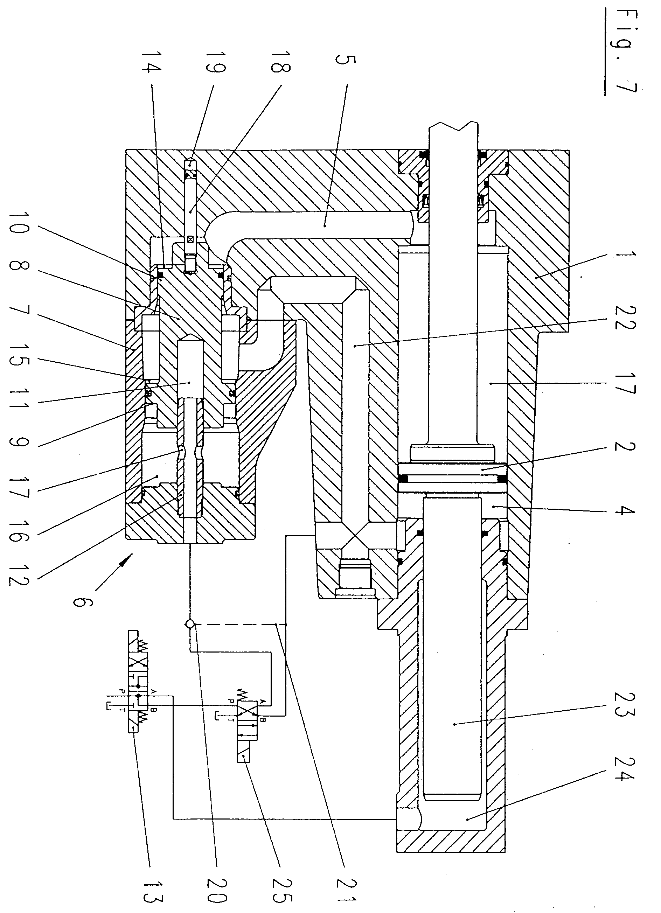

Fig. 7 zeigt die Anordnung nach Beendigung des Spritzvorganges. Die Ventile 13 und 25 sind umgeschaltet, so daß die Rückkehrbewegung sowohl des Kolbenelements 8 des Druckübersetzers 6 als auch des Schließkolbens 2 beginnen kann. Der Systemdruck liegt sowohl am Kanal 22 als auch am Zylinderraum 24 an. Außerdem hat sich das Rückschlagventil 20 geöffnet, so daß der Raum 16 hinter dem Niederdruckkolben 9 des Druckübersetzers 6 drucklos ist. Die Rückkehrbewegung des Kolbenelements 8 des Druckübersetzers 6 erfolgt durch den über den Kanal 22 auf den Niederdruckkolben 9 einwirkenden Druck. Der Zapfen 18 des Kolbenelements 8 erfüllt im vorliegenden Fall eine reine Führungsfunktion.

Sobald der Druckübersetzer 6 die Verbindung zwischen dem Kanal 5 und dem Kanal 22 freigegeben hat, wandert der Schließkolben 2 in die in Fig. 4 gezeigte Position zurück.

Im Rahmen der Erfindung sind durchaus Abwandlungsmöglichkeiten gegeben. So kann bei der Ausführungsform nach den Fig. 4 bis 7 auf den Zapfen 18 des Kolbenelements 8 verzichtet werden, wenn die Führung durch den Fahrkolben 12 ausreicht, das Kolbenelement 8 während seines freien Weges sicher zu positionieren. Auch sind die übrigen, in den Ausführungsbeispielen gezeigten Details variabel. Beispielsweise können die Ventile 13 und 25 zu einer Einheit integriert werden.

## Patentansprüche

1. Hydraulische Formschließvorrichtung für eine Spritzgießmaschine, insbesondere zur Verarbeitung von Kunststoff, mit
- mindestens einem in einem Schließzylindergehäuse (1) arbeitenden Schließkolben (2),
- einem Hydrauliktank (T),
- einer Hydraulikpumpe (P),
- einem zur Druckseite des Schließkolbens (2) führenden Kanal (5), der mit dem Hydrauliktank (T) verbindbar ist, und
- einem mit dem Kanal (5) verbundenen Druckübersetzer (6) in dessen Gehäuse (7) ein einen Hochdruckkolben (10) und einen Niederdruckkolben (9) bildendes Kolbenelement (8) arbeitet, wobei der Hochdruckkolben (10) beim Aufbauen des Schließdrucks als abdichtendes Ventilelement in den einen Hochdruckzylinder (14) bildenden Kanal (5) eintaucht und der Niederdruckkolben (9) mit einem Niederdruckzylinder (15) zusammenwirkt,
**dadurch gekennzeichnet,**
- daß der Niederdruckkolben des Druckübersetzers (6) druckseitig einen Fahrzylinder (11) bildet, in den ein rohrförmiger, an die Hydraulikpumpe (P) und an den Hydrauliktank (T) anschließbarer Fahrkolben (12) eintaucht,
- daß sich an den Niederdruckzylinder (15) druckseitig ein Raum (16) mit erweitertem Durchmesser zur Aufnahme des Niederdruckkolbens (9) bei geöffnetem Hochdruckzylinder (14) anschließt, wobei in dieser Stellung der Abstand des Niederdruckkolbens (9) vom Niederdruckzylinder (15) höchstens dem Hub des Hochdruckkolbens (10) bis zum abdichtenden Eintauchen in den Hochdruckzylinder (14) entspricht, und
- daß der rohrförmige Fahrkolben (12) seitliche Öffnungen (17) aufweist, die aus dem Fahrzylinder (11) austreten, sobald der Hochdruckkolben (10) in den Hochdruckzylinder (14) eintritt.

2. Formschließvorrichtung nach Anspruch 1, dadurch gekennzeichnet, daß der Hochdruckkolben (10) des Druckübersetzers (6) einen axialen Zapfen (18) trägt, der in einer Gehäuseführung (19) gleitet.

3. Formschließvorrichtung nach Anspruch 2, dadurch gekennzeichnet, daß die Gehäuseführung (19) für den axialen Zapfen (18) als Zylinder ausgebildet sowie mit dem Hydrauliktank (T) und der Hydraulikpumpe (T) verbindbar ist.

4. Formschließvorrichtung nach Anspruch 1 oder 2, dadurch gekennzeichnet, daß der zur Druckseite des Schließkolbens (2) führende Kanal (5) bei geöffnetem Hochdruckzylinder (14) des Druckübersetzers (6) an einen Kanal (22) angeschlossen ist, der zu der der Druckseite gegenüberliegenden Seite des Schließkolbens (2) führt.
